# FASCICULE DE BREVET EUROPEEN

(11) **EP 2 284 972 B1**
(45) Date de publication et mention de la délivrance du brevet: **07.08.2013**
(21) Numéro de dépôt: 09305755.2
(22) Date de dépôt: 13.08.2009
(51) Int. Cl.: H02G 15/18

(54) **Ensemble de pose d'un manchon élastique rétractable à froid pour câbles électriques**
Einbaueinheit eines kalt einziehbaren, elastischen Schutzmantels für Elektrokabel
Device for installing a cold-shrink elastic sleeve for electric cables

(43) Date de publication de la demande: 16.02.2011
(73) Titulaire: Nexans, 75008 Paris (FR)
(72) Inventeur: Cardinaels, Josef, 9230, Wetteren (BE)
(74) Mandataire: Hervouet, Sylvie

(56) Documents cités:
- WO-A1-2004/006403
- WO-A1-2005/067116
- DE-A1- 3 529 550
- FR-A1- 2 791 480

## Description

La présente invention concerne un ensemble permettant la pose d'un manchon rétractable à froid autour de câbles électriques pour assurer la jonction étanche de deux câbles électriques ou la terminaison d'un câble électrique.

Un tel ensemble de pose est déjà connu et comporte classiquement deux tubes supports de section circulaire en matière plastique, par exemple en polypropylène, aboutés, revêtus du manchon élastomère rétractable à froid monté en expansion longitudinalement sur les deux tubes. Pour la pose du manchon, le ou les câbles électriques sont enfilés dans les tubes de façon à ce que ces derniers entourent longitudinalement la zone de jonction (cas de deux câbles en série) ou la zone de terminaison (cas d'un seul câble). Les tubes supports sont ensuite retirés l'un après l'autre par tirée et par cassure de chaque côté de la jonction, et le manchon vient recouvrir intimement, par rétractation, la zone de jonction ou la zone de terminaison.

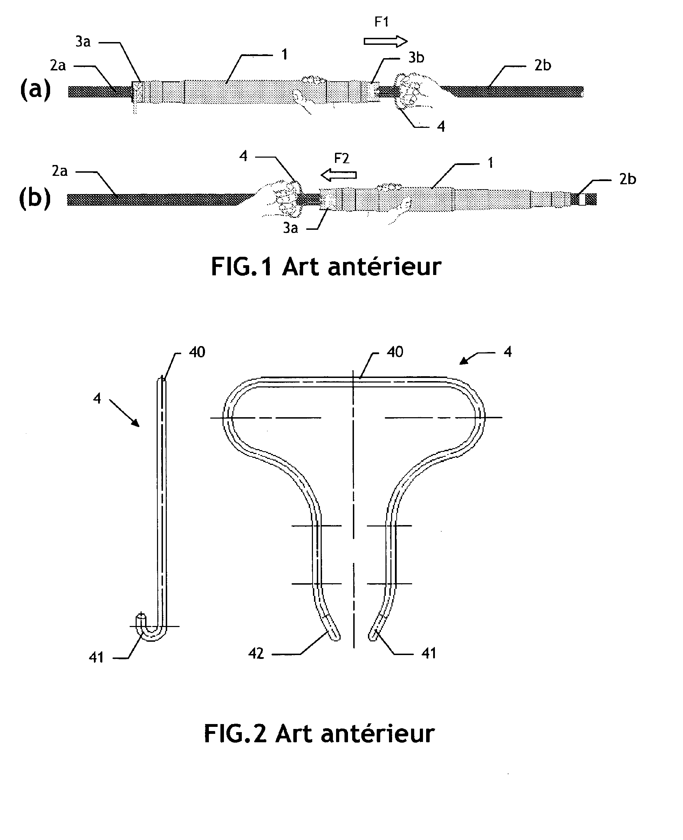

La figure 1 illustre les consignes de pose précédentes pour le cas d'un joint 1 rétractable à froid commercialisé par une filiale de la Demanderesse sous la référence 24CSJ-2, à positionner autour de deux câbles électriques 2a, 2b. Sur cette figure, on voit le joint rétractable 1 sous forme de manchon monté en expansion sur les deux tubes 3a, 3b de l'ensemble de pose. L'ensemble de pose est ici déjà mis en place autour de la zone de jonction des deux câbles 2a, 2b. La partie (a) de la figure 1 illustre l'étape de retrait du tube support 3b. Pour ce faire, l'ensemble de pose comporte un crochet 4 relié à l'extrémité libre du tube support 3b dont la forme est visible sur les deux vues de la figure 2. Ce crochet est ici constitué d'un fil ressort métallique replié en forme générale de U. Les extrémités libres du U sont recourbées de manière à former deux extrémités de fixation 41, 42 aptes à être engagées dans deux orifices correspondant sur l'extrémité du tube support 3b pour assurer la fixation du crochet 4 sur le tube support. Dans la base du U, le crochet comporte une partie évasée 40 formant partie de préhension du crochet. Lorsque le crochet est fixé à l'extrémité du tube support, les deux branches du U sont sensiblement parallèles à l'axe longitudinal de l'ensemble de pose, et la partie de préhension s'étend sensiblement longitudinalement à l'opposé de l'ensemble de pose par rapport à l'extrémité du tube support considéré. Comme visible sur la partie (a) de la figure 1, l'opérateur qui effectue la pose du joint 1 doit maintenir en place avec une main l'ensemble autour de la connexion, tandis que, de l'autre main, il tire le tube 3b dans un mouvement de translation longitudinale comme indiqué par la flèche F1, parallèlement aux branches du U du crochet 4. Lorsque le tube 3b est intégralement extrait du manchon, la partie correspondante du joint 1 se retrouve dans la position visible sur la partie (b) de la figure 1, intimement serrée par rétractation autour de la zone de jonction. L'opérateur réitère alors la même opération au niveau de l'autre tube support 3a. Pour ce faire, il utilise de préférence le même crochet 4 qu'il vient fixer au niveau des orifices de fixation correspondants à l'extrémité du tube 3a, puis, tout en maintenant d'une main l'ensemble, il extrait en translation longitudinale le tube 3a par tirage sur le crochet 4, comme indiqué par le flèche F2. Lorsque les deux tubes supports 3a et 3b ont été extraits, ils sont de préférence totalement retirés. Pour ce faire, on peut prévoir par exemple de réaliser chaque tube support sous la forme de deux demi tubes reliés par soudure. Le tube peut alors être retiré lors du montage par cassure le long des cordons de soudure.

Dans de tels ensembles de pose, les deux tubes supports aboutés se rencontrent généralement dans une zone située sensiblement au milieu du manchon rétractable, comme c'est le cas sur l'ensemble représenté sur la figure 1. En variante, il est connu de prévoir que l'un des tubes supports soit plus long que l'autre, les deux tubes supports aboutés se rencontrant alors dans une zone d'extrémité à l'intérieur du manchon rétractable. Dans tous les cas, les longueurs de tubes doivent permettre à un opérateur de pouvoir retirer chaque tube sans avoir à exercer une force de tirage trop importante au niveau du crochet. Pour faciliter l'extraction par tirage, on peut prévoir que les tubes supports ne soient pas cylindriques, mais de forme légèrement tronconique, avec un angle d'environ 0,5 degré entre l'extrémité du tube placée à l'intérieur du manchon, et la deuxième extrémité portant les orifices de fixation.

L'inconvénient majeur des ensembles de pose connus réside d'une part, dans leur encombrement important, notamment du fait de la longueur des tubes et de la nécessité d'extraire de chaque côté du manchon ces tubes, et d'autre part, dans leur coût important, notamment du fait de la nécessité d'utiliser deux tubes supports.

Ainsi, la Demanderesse s'intéresse plus particulièrement à un ensemble de pose qui ne nécessiterait qu'un unique tube support autour duquel le manchon serait monté en expansion. Néanmoins, dans certains cas, l'effort de traction pour extraire le tube support devient trop important pour un opérateur.

Une première solution pourrait consister à augmenter l'angle du tube support de forme tronconique. Cette solution oblige cependant à réaliser de nouveaux moules pour la fabrication de nouveaux tubes supports. L'expansion nécessaire pour le manchon se trouverait en outre augmentée en termes de diamètre.

D'autres solutions ont déjà été proposées, par exemple par le document DE 3529550, pour désolidariser le manchon rétractable à froid de son tube support par poussée sur le manchon. Ces solutions sont néanmoins coûteuses à mettre en oeuvre car elles nécessitent l'utilisation d'outils spécifiques. De plus, elles ne peuvent être utilisées pour des tubes supports déjà existants.

La présente invention a pour but de proposer un ensemble de pose simple et peu coûteux, facilitant la mise en place du manchon rétractable pour un opérateur, sans avoir à modifier les structures existantes des manchons et tubes supports.

Ce but est atteint selon l'invention qui a pour objet un ensemble de pose d'un manchon élastique rétractable à froid pour la terminaison d'un câble électrique ou la jonction de deux câbles électriques, ledit ensemble de pose comportant un tube support autour duquel ledit manchon est monté longitudinalement en expansion, et un organe de retrait relié à une extrémité du tube support et comportant une partie de préhension permettant le retrait manuel dudit tube support par translation longitudinale relative du manchon et du tube support, et le serrage par rétractation dudit manchon autour de ladite terminaison ou de ladite jonction, **caractérisé en ce que** la partie de préhension constitue un levier actionnable en rotation autour d'un axe orthogonal à l'axe longitudinal du tube support, et en ce que l'organe de retrait comporte une deuxième partie reliée mécaniquement à la partie de préhension, ladite deuxième partie étant apte à venir en butée contre le tube support et une extrémité du manchon et à pousser ledit manchon selon une translation longitudinale le long du support commandée par la rotation dudit levier.

Dans un mode de réalisation préféré du fait de sa simplicité de fabrication, la partie de préhension et la deuxième partie de l'organe de retrait sont en fil métallique à ressort.

Dans ce cas, la partie de préhension peut être sous la forme d'un fil métallique à ressort replié en forme générale de U, les deux branches du U étant enroulées pour constituer deux oreilles et les deux extrémités libres du U étant recourbées pour former deux extrémités de fixation aptes à être engagées dans deux orifices correspondant prévus sur le tube support.

La deuxième partie peut être alors sous la forme d'un fil métallique à ressort replié de manière à présenter une barre ou zone d'appui apte à venir en butée contre le tube support et une extrémité du manchon pour pousser ledit manchon , et deux extrémités (47, 48) sensiblement parallèles à la barre (46) et venant s'articuler respectivement dans lesdites oreilles (43, 44).

Ainsi, une très légère modification du crochet de la figure 2 consistant à rajouter d'une part des oreilles sur la partie de préhension, et d'autre part, une partie formant étrier dont la translation est commandée par le levier, permet de faciliter la pose du manchon, même si l'ensemble de pose ne comporte qu'un tube support.

La barre ou zone d'appui de l'étrier a de préférence un profil en arc de cercle apte à épouser la forme du tube support, de manière à garantir un bon appui et un bon guidage lors de l'opération de pose.

L'invention et les avantages qu'elle procurent seront mieux compris au vu de la description suivante d'un exemple de réalisation d'un ensemble de pose conforme à l'invention, faite en référence aux figures annexées, dans lesquelles :
- La figure 1 déjà décrite, représente schématiquement certaines étapes de pose d'un joint rétractable à froid du type 24CSCJ-2 commercialisé par la Demanderesse ;
- La figure 2, déjà décrite, illustre un organe de retrait sous forme d'un crochet de tirage connu utilisé pour la pose du joint rétractable de la figure 1, vu de dessus et de côté ;
- La figure 3 illustre différentes vues d'une réalisation préférée d'un organe de retrait pour l'ensemble de pose conforme à la présente invention ;
- La figure 4 illustre schématiquement l'étape de désolidarisation du tube support et du manchon rétractable conforme à la présente invention sur une coupe longitudinale partielle de l'ensemble de pose.

Le principe de la présente invention consiste à utiliser le crochet non plus comme un simple outil de tirage pour extraire manuellement le tube support par translation longitudinale du tube par rapport au manchon mais comme un organe de levier dont la rotation autour d'un axe perpendiculaire à l'axe longitudinal du tube support, passant ici par son point de fixation au tube support, va engendrer une force de poussée longitudinale sur une extrémité du manchon rétractable. Ce dernier va ainsi se déplacer en translation longitudinale le long du support.

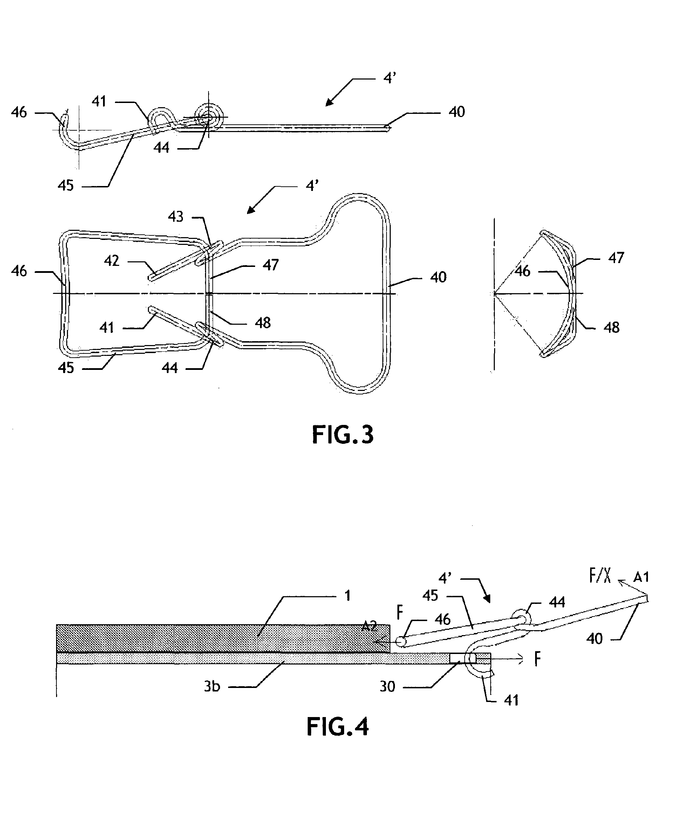

La figure 3 illustre la modification du crochet 4' réalisée selon un mode préféré de l'invention. Sur cette figure, on retrouve quasiment à l'identique la partie du crochet 4 de la figure 2 comportant un fil métallique à ressort replié en forme de U avec ses deux extrémités de fixation recourbées 41, 42, et la partie de préhension 40 au niveau de la base du U. Tout comme dans le cas des figures 1 et 2, cette partie de crochet est destinée à être fixée à une extrémité du tube support 3b par l'intermédiaire des extrémités de fixation 41, 42 venant s'engager au travers d'orifices 30 traversant correspondants prévus dans la paroi du tube support (voir figure 3), et à s'étendre sensiblement longitudinalement au-dessus du câble électrique depuis son point de fixation au tube support 3b en s'éloignant de l'ensemble de pose lors des opérations de pose du manchon rétractable. De manière différente cependant, la partie de préhension a été repliée, par exemple enroulée, au niveau de chaque branche du U de façon à former deux oreilles 43, 44 en vis-à-vis symétriquement par rapport à l'axe longitudinal, oreilles dont le rôle sera explicité ci-après.

Conformément à l'invention, la partie de préhension 40 constitue un levier actionnable manuellement en rotation autour d'un axe perpendiculaire à l'axe longitudinal du tube support, passant par le point de fixation du levier au tube support 1. En d'autres termes, les deux extrémités de fixation 41, 42 reliées aux deux orifices correspondant sur l'extrémité du tube, constituent le pont d'appui du levier. En outre, le crochet 4' comporte une deuxième partie 45, ou étrier, s'étendant sensiblement longitudinalement à l'opposé, par rapport au point de fixation ou d'appui, de la partie de préhension 40 formant levier, cette deuxième partie 45 étant apte à venir en butée contre le tube support 3b et une extrémité du manchon 1, et étant reliée mécaniquement à la partie de préhension 40 de manière à pousser ledit manchon 1 selon une translation longitudinale le long du tube support 3b commandée par la rotation du levier 40.

L'étrier 45 est également constitué de préférence d'un fil métallique à ressort replié de manière à présenter une barre ou zone d'appui 46 apte à venir effectivement en butée contre le tube support 1 et l'extrémité du manchon, et deux extrémités 47, 48 sensiblement parallèles à la barre 46 et venant s'articuler respectivement dans les oreilles 43, 44 du levier 40. L'étrier 45 est ainsi articulé à rotation autour d'un axe passant au centre des deux oreilles 43, 44, sensiblement perpendiculaire à l'axe longitudinal. En conséquence, le mouvement de rotation du levier 40 autour de son point d'appui engendre une translation longitudinale de l'étrier qui va pousser le manchon en translation par rapport au tube support, avec un effort multiplié, par rapport à la force exercée par un opérateur sur le levier, par un coefficient correspondant au rapport entre les longueurs du levier entre d'une part, le point d'appui du levier et les oreilles 43, 44, et d'autre part, les oreilles 43, 44 et l'extrémité de la partie de préhension. Les oreilles 43, 44 doivent donc être positionnées à moins de la moitié de la longueur totale du levier par rapport au point d'appui, de manière à produire un effet levier intéressant pour l'opérateur. On choisira par exemple de positionner ces oreilles entre un tiers et un cinquième de la longueur totale du levier. Pour assurer un bon appui et un bon guidage en translation longitudinale, la barre ou zone d'appui 46 présente avantageusement un profil en arc de cercle de façon à épouser la forme du tube support 3b lors de l'opération de pose.

Le fonctionnement de l'organe de retrait lors d'une opération de pose du manchon va à présent être explicité en référence à la figure 4 qui représente de manière très schématique la moitié supérieure d'un ensemble de pose conforme à l'invention, comportant le manchon 1 à poser par rétractation, et un tube support 3b autour duquel le manchon 1 est expansé. Pour le retrait du tube support, l'organe de retrait 4' de la figure 3 est fixé à l'extrémité du tube support en engageant les extrémités de fixation 41, 42 dans les orifices de fixation 30 situés sur la partie supérieure du tube support 3b. L'organe de retrait se retrouve alors dans la position représentée sur la figure 4, avec la barre 46 de l'étrier proche du tube 3b et de l'extrémité du manchon 4.

La partie de préhension 40 formant levier est ensuite manoeuvrée par un opérateur selon la flèche A1. Par cette manoeuvre, la barre 46 vient en butée contre le tube support 3b et l'extrémité du manchon 1, et la rotation du levier autour de son point d'appui provoque la poussée du manchon 1 selon la flèche A2. Comme indiqué précédemment, une force de poussée F est obtenue alors qu'un effort moindre, noté F/X, est effectué par l'opérateur. Comme le manchon 1 est poussé longitudinalement, l'extrémité de ce manchon située de l'autre côté du tube support va commencer à se rétracter, ce qui va faciliter encore son déplacement.

On peut dimensionner l'organe de retrait pour qu'une rotation du levier 40 permette un déplacement sur quelques centimètres seulement, par exemple de l'ordre de 3 centimètres, du manchon 1 le long du tube support 3b. L'effort que doit exercer l'opérateur par tirage du tube support devient alors tout à fait acceptable, de sorte que l'opérateur peut utiliser l'organe de retrait comme le crochet de la figure 2, en tirant sur le tube support 3b jusqu'à sa complète extraction.

En variante, on peut prévoir des aménagements de l'organe de retrait, par exemple au niveau de l'étrier, pour provoquer des déplacements successifs par poussée du manchon en manoeuvrant plusieurs fois de suite le levier.

Il convient de noter que, contrairement à l'opération de retrait par tirage décrite en référence à la figure 1, dans laquelle l'opérateur doit maintenir d'une main l'ensemble de pose tandis qu'il tire sur le crochet, ceci afin de contrebalancer l'effort de tirage, le retrait du tube peut s'effectuer ici par la seule main actionnant le levier, ce qui est beaucoup plus confortable pour l'opérateur.

Le mode de réalisation décrit en référence aux figures annexées constitue un mode de réalisation préféré du fait de sa simplicité de mise en oeuvre qui ne nécessite qu'une faible modification du crochet de tirage connu décrit sur la figure 2. Bien entendu, d'autres formes de réalisation de l'organe de retrait reposant sur le principe de la conversion d'un mouvement de rotation d'un levier en un effort de poussée en translation longitudinale peuvent être envisagées sans départir du cadre de la présente invention.

## Revendications

1. Ensemble de pose d'un manchon (1) élastique rétractable à froid pour la terminaison d'un câble électrique ou la jonction de deux câbles électriques (2a, 2b), ledit ensemble de pose comportant un tube support (3b) autour duquel ledit manchon est monté longitudinalement en expansion, et un organe de retrait (4') relié à une extrémité du tube support (3b) et comportant une partie de préhension (40) permettant le retrait manuel dudit tube support (3b) par translation longitudinale relative du manchon et du tube support, et le serrage par rétractation dudit manchon autour de ladite terminaison ou de ladite jonction, **caractérisé en ce que** la partie de préhension (40) constitue un levier actionnable en rotation autour d'un axe orthogonal à l'axe longitudinal du tube support (3b), et **en ce que** l'organe de retrait (4') comporte une deuxième partie (45) reliée mécaniquement à la partie de préhension (40), ladite deuxième partie (45) étant apte à venir en butée contre le tube support (3b) et une extrémité du manchon (1) et à pousser ledit manchon selon une translation longitudinale le long du support commandée par la rotation dudit levier.

2. Ensemble de pose selon la revendication 1, **caractérisé en ce que** la partie de préhension (40) et la deuxième partie (45) de l'organe de retrait (4') sont en fil métallique à ressort.

3. Ensemble de pose selon la revendication 2, **caractérisé en ce que** la partie de préhension (40) est sous la forme d'un fil métallique à ressort replié en forme générale de U, les deux branches du U étant enroulées pour constituer deux oreilles (43, 44) et les deux extrémités libres (41, 42) du U étant recourbées pour former deux extrémités de fixation aptes à être engagées dans deux orifices (30) correspondant prévus sur le tube support (3b).

4. Ensemble de pose selon la revendication 3, **caractérisé en ce que** la deuxième partie (45) est sous la forme d'un fil métallique à ressort replié de manière à présenter une barre ou zone d'appui (46) apte à venir en butée contre le tube support (3b) et une extrémité du manchon (1) pour pousser ledit manchon (1), et deux extrémités (47, 48) sensiblement parallèles à la barre (46) et venant s'articuler respectivement dans lesdites oreilles (43, 44).

5. Ensemble de pose selon la revendication 4, **caractérisé en ce que** la barre ou zone d'appui (46) a un profil en arc de cercle apte à épouser la forme du tube support (3b).

## Patentansprüche

1. Einbaueinheit eines kalt einziehbaren elastischen Schutzmantels (1) für die Beendigung eines Elektrokabels oder die Verbindung von zwei Elektrokabeln (2a, 2b), wobei die Einbaueinheit ein Stützrohr (3b) aufweist, um das der Schutzmantel längs in Expansion montiert ist, und ein Rückzugorgan (4'), das mit einem Ende des Stützrohrs (3b) verbunden ist und einen Griffteil (40) aufweist, der den manuellen Rückzug des Stützrohrs (3b) durch relative Längsverschiebung des Schutzmantels und des Stützrohrs erlaubt, und das Spannen des Schutzmantels um die Beendigung oder die Verbindung durch Einzug, **dadurch gekennzeichnet, dass** das Griffteil (40) einen Hebel darstellt, der um eine Achse orthogonal zur Längsachse des Stützrohrs (3b) drehbar betätigbar ist, und dass das Rückzugorgan (4') einen zweiten Teil (45) aufweist, der mit dem Griffteil (40) mechanisch verbunden ist, wobei der zweite Teil (45) imstande ist, an das Stützrohr (3b) und ein Ende des Schutzmantels (1) anzuschlagen und den Schutzmantel gemäß einer Längsverlagerung entlang der Stütze, gesteuert durch Drehung des Hebels, zu schieben.

2. Einbaueinheit nach Anspruch 1, **dadurch gekennzeichnet, dass** der Griffteil (40) und der zweite Teil (45) des Rückzugorgans (4') aus Metallfederdraht sind.

3. Einbaueinheit nach Anspruch 2, **dadurch gekennzeichnet, dass** der Griffteil (40) in Form eines in allgemeiner U-Form gefalteten Metallfederdrahts ist, wobei die zwei Schenkel des U eingerollt sind, um zwei Ohren (43, 44) zu bilden und die zwei freien Enden (41, 42) des U gekrümmt sind, um zwei Befestigungsenden zu bilden, die imstande sind, in zwei entsprechende Öffnungen (30) einzugreifen, die auf dem Stützrohr (3b) vorgesehen sind.

4. Einbaueinheit nach Anspruch 3, **dadurch gekennzeichnet, dass** der zweite Teil (45) in Form eines Metallfederdrahts ist, der derart gefaltet ist, dass er einen Stab oder eine Stützzone (46) aufweist, die imstande ist, an das Stützrohr (3b) und ein Ende des Schutzmantels (1) anzuschlagen, um den Schutzmantel (1) zu schieben, und zwei zum Stab (46) etwa parallele Enden (47, 48), die in den jeweiligen Ohren (43, 44) angelenkt sind.

5. Einbaueinheit nach Anspruch 4, **dadurch gekennzeichnet, dass** der Stab oder die Stützzone (46) ein Kreisbogenprofil hat, das imstande ist, die Form des Stützrohrs (3b) anzunehmen.

## Claims

1. A device for installing a cold-shrink elastic sleeve (1) for the terminating end of an electrical cable or the junction of two electrical cables (2a, 2b), said installation device including a support tube (3b) around which said sleeve is longitudinally mounted in expansion, and a removal member (4') connected to one end of the support tube (3b) and including a gripping portion (40) allowing manual removal of said support tube (3b) through relative longitudinal translation of the sleeve and the support tube, and gripping by shrinking of said sleeve around said terminating end or junction, **characterized in that** the gripping portion (40) constitutes a lever that can be rotated around an axis orthogonal to the longitudinal axis of the support tube (3b), and **in that** the removal member (4') includes a second portion (45) mechanically connected to the gripping portion (40), said second portion (45) being capable of abutting against the support tube (3b) and one end of the sleeve (1) and pushing said sleeve in longitudinal translation along the support controlled by the rotation of said lever.

2. The installation device according to claim 1, **characterized in that** the gripping portion (40) and the second portion (45) of the removal member (4') are made from metal spring wire.

3. The installation device according to claim 2, **characterized in that** the gripping portion (40) is in the form of a metal spring wire folded the general shape of a U, the two branches of the U being wound to form two ears (43, 44) and the two free ends (41, 42) of the U being curved to form two fastening ends capable of being engaged in two corresponding orifices (30) provided on the support tube (3b).

4. The installation device according to claim 3, **characterized in that** the second portion (45) is in the form of a metal spring wire folded so as to have a bar or bearing area (46) capable of abutting against the support tube (3b) and one end of the sleeve (1) to push said sleeve (1), and two ends (47, 48) substantially parallel to the bar (46) and respectively articulated in said ears (43, 44).

5. The installation device according to claim 4, **characterized in that** the bar or bearing area (46) has an arc-of-circle profile capable of fitting the shape of the support tube (3b).
